# FASCICULE DE BREVET EUROPEEN

(11) **EP 0 771 275 B1**
(45) Date de publication et mention de la délivrance du brevet: **21.07.1999**
(21) Numéro de dépôt: 96903945.2
(22) Date de dépôt: 30.01.1996
(51) Int. Cl.: B60C 9/20

(54) **ARMATURE DE SOMMET POUR PNEUMATIQUE RADIAL**
GÜRTEL FÜR RADIALREIFEN
RADIAL TYRE CROWN REINFORCEMENT

(30) Priorité: 13.02.1995 FR 9501705
(43) Date de publication de la demande: 07.05.1997
(73) Titulaire: COMPAGNIE GENERALE DES ETABLISSEMENTS MICHELIN - MICHELIN & CIE, 63040 Clermont-Ferrand Cédex (FR)
(72) Inventeur: CLUZEL, Guy, F-63110 Beaumont (FR)
(74) Mandataire: Devaux, Edmond-Yves
(86) Numéro de dépôt international: EP9600347
(87) Numéro de publication internationale: WO9625297

(56) Documents cités:
- DE-A- 3 327 670
- US-A- 4 696 335

## Description

La présente invention concerne un pneumatique à armature de carcasse radiale ancrée de part et d'autre à au moins une tringle de bourrelet et ayant une armature de sommet constituée d'au moins deux nappes dites de travail, superposées et formées de fils ou câbles parallèles dans chaque nappe et croisés d'une nappe à la suivante en faisant avec la direction circonférentielle du pneumatique des angles au plus égaux à 45° en valeur absolue.

Un tel pneumatique, plus particulièrement du type "Poids Lourds", de rapport de forme H/S au plus égal à 0,80 et destiné à équiper un véhicule de moyen ou fort tonnage, possède une armature de sommet comprenant aussi une nappe de fils ou câbles métalliques à faible extensibilité faisant avec la direction circonférentielle un angle compris entre 60° et 90°, cette nappe, dite de triangulation, étant radialement située entre l'armature de carcasse et la première nappe de sommet dite de travail. La nappe de triangulation forme avec les deux nappes de travail une armature triangulée, qui présente, sous les différentes contraintes qu'elle subit, peu de déformations, la nappe de triangulation ayant pour rôle essentiel de reprendre les efforts de compression transversale dont est l'objet l'ensemble des renforcements dans la zone du sommet du pneumatique.

Certains pneumatiques actuels, dits "routiers", sont destinés à rouler à grande vitesse et sur des trajets de plus en plus longs, du fait de l'amélioration du réseau routier et de la croissance du réseau autoroutier dans le monde. L'ensemble des conditions, sous lesquelles un tel pneumatique est appelé à rouler, permet sans aucun doute un accroissement du nombre de kilomètres parcourus, l'usure du pneumatique étant moindre ; par contre l'endurance de ce dernier et en particulier de l'armature de sommet est fortement pénalisée.

Les contraintes existantes au niveau de l'armature de sommet et plus particulièrement les contraintes de cisaillement entre les deux nappes de sommet de travail, alliées à une élévation non négligeable de la température de fonctionnement au niveau des extrémités de la nappe de travail la plus courte, ont pour conséquence l'apparition et la propagation de fissures de la gomme au niveau desdites extrémités, et ceci malgré la présence à la jonction des bords de nappes de sommet de travail d'une couche de caoutchouc épaissie.

Afin de remédier aux inconvénients ci-dessus et d'améliorer l'endurance de l'armature de sommet du type de pneumatique étudié, ce dernier, conformément à l'invention. comprend une armature de carcasse radiale surmontée d'une armature de sommet composée au moins, en allant radialement de l'intérieur à l'extérieur, d'une nappe de triangulation de fils ou câbles métalliques inextensibles formant avec la direction circonférentielle un angle compris entre 60° et 90°, et de deux nappes de travail formées de fils ou câbles métalliques inextensibles, croisés d'une nappe à la suivante en faisant avec la direction circonférentielle un angle compris entre 10° et 45°. Il est caractérisé en ce que la première nappe de travail radialement adjacente à l'extérieur à la nappe de triangulation a une largeur plus faible que la largeur de ladite nappe de triangulation, la deuxième nappe de travail, radialement au-dessus de la première, ayant une largeur axiale plus grande que la largeur de la nappe de triangulation, et les bords de ladite deuxième nappe de travail recouvrant les bords de ladite nappe de triangulation de sorte que les distances radiales séparant les câbles respectifs des deux nappes au niveau desdits bords soient au plus égales à 1,5 mm sur une distance axiale au moins égale à 2 % de la largeur axiale de la nappe de triangulation.

On entend par distance radiale séparant deux câbles respectifs des deux nappes l'épaisseur de caoutchouc mesurée radialement entre les génératrices respectivement supérieure et inférieure desdits câbles.

Une variante de l'invention particulièrement bénéfique pour l'endurance de l'armature de sommet consiste à associer à l'architecture ci-dessus une nappe d'éléments métalliques circonférentiels, ladite nappe ayant une largeur axiale inférieure à la largeur de la première nappe de travail et étant située radialement entre les deux nappes de travail.

Les caractéristiques et avantages de l'invention seront mieux compris à l'aide de la description qui suit et qui se réfère au dessin illustrant à titre non limitatif des exemples d'exécution, et sur lequel :
- la figure 1 représente schématiquement et vue en section méridienne une première variante d'armature de sommet conforme à l'invention, et
- la figure 2 représente schématiquement une deuxième variante d'armature de sommet.

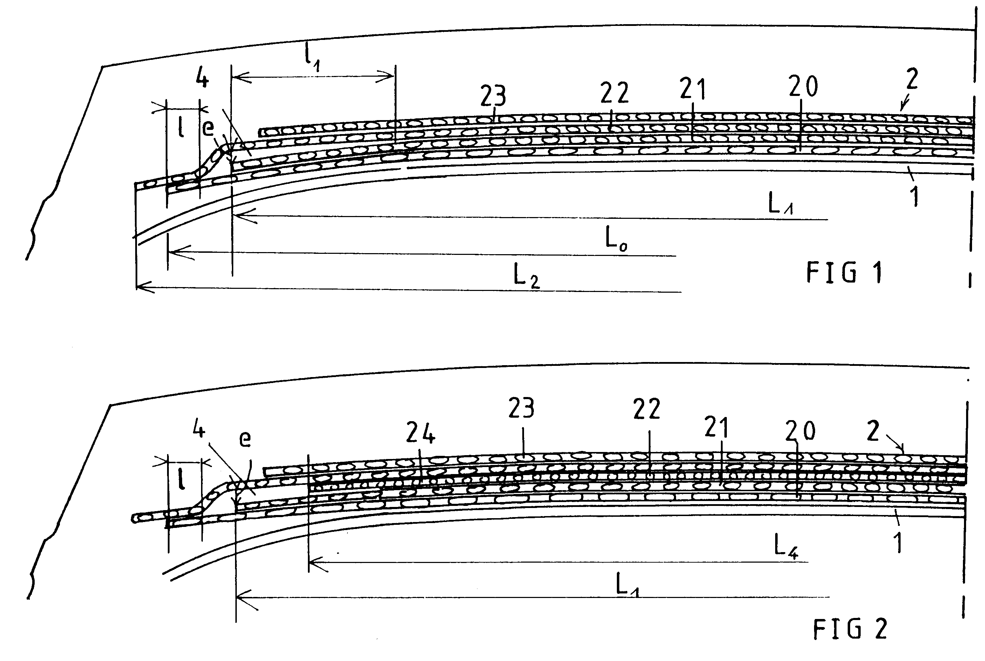

Sur la figure 1, l'armature de sommet (2) d'un pneumatique, dénommé 495/45 R 22.5, surmonte radialement une armature de carcasse (1) formée d'une seule nappe de câbles métalliques inextensibles. Sont dits inextensibles des câbles présentant, sous une force égale à 10 % de leur charge de rupture un allongement relatif au plus égal à 0.5 %. L'armature de sommet (2) est composée, radialement de l'intérieur à l'extérieur, d'une nappe (20) de câbles métalliques inextensibles formant avec la direction circonférentielle du pneumatique un angle α de 65°. Ladite nappe (20) a une largeur axiale L₀, égale à 400 mm, ladite largeur étant généralement comprise entre 70 % et 90 % de la largeur axiale maximale de la fibre neutre de l'armature de carcasse (1), et sensiblement égale à la largeur de la bande roulement du pneumatique (non montrée). Radialement au-dessus de cette nappe de triangulation (20), et adjacente à cette dernière, la première nappe de travail (21), formée de câbles inextensibles faisant avec la direction circonférentielle un angle β de 18° et de même orientation que l'angle des câbles de la nappe de triangulation, a une largeur L₁ égale à 365 mm. Les câbles de la première nappe de travail (21) et les câbles de la nappe de triangulation (20), sur la largeur axiale commune aux deux nappes, sont séparés radialement entre eux par une mince couche de gomme, dont l'épaisseur correspond au double de l'épaisseur de la couche caoutchouteuse de calandrage de la nappe, soit 0,8 mm. Radialement au-dessus de la première nappe de travail (21), est localisée la deuxième nappe de sommet de travail (22), formée de câbles inextensibles faisant avec la direction circonférentielle un angle γ égal à l'angle β et à 18°, mais d'orientation opposée à celle de β. Ladite seconde nappe de travail (22) est nettement plus large que la première nappe de travail (21), et plus large que la nappe de triangulation (20), sa largeur L₂ étant égale à 415 mm. Entre les deux nappes de sommet de travail (21) et (22), axialement à l'intérieur de chaque extrémité de la seconde nappe de travail (22) est disposé un profilé (4) de mélange caoutchouteux sensiblement triangulaire de largeur axiale l₁ égale à 22 mm, soit 6 % de la largeur L₁ de la nappe de travail (21), (l₁ peut être comprise entre 5 % et 12 % de la largeur L₁) et dont l'épaisseur e au niveau de l'extrémité de la seconde nappe de travail est au moins égale à 2 mm. Ledit profilé est par ailleurs prolongé axialement à l'extérieur, et sert à combler le vide créé entre une partie de la seconde nappe de travail (22) et la nappe de triangulation (20), lesdites deux nappes étant radialement adjacentes et leurs câbles étant radialement séparés par une mince couche de mélange caoutchouteux, de faible épaisseur égale à 0,8 mm, c'est-à-dire égale à l'épaisseur de la couche séparant les deux nappes de travail (21) et (22), sur une largeur axiale 1 de 8 mm.

La largeur moindre de la première nappe de travail (21) et le couplage de la seconde nappe de travail (22) avec la nappe de triangulation (20) d'une part par l'épaisseur de caoutchouc la plus faible possible, et d'autre part sur une largeur axiale judicieusement choisie au niveau de leurs bords respectifs, permet non seulement une diminution des contraintes de cisaillement entre les deux nappes de travail au niveau de leurs extrémités respectives, (ce qui se traduit par une diminution de la déformation par cisaillement du profilé (4) de l'ordre de 18 %), mais aussi, et de manière inattendue, une diminution de la température de fonctionnement de l'ordre de 12°, ladite température de fonctionnement étant la température la plus élevée relevée dans la région des bords du sommet du pneumatique (région la plus chaude), après roulage dans les conditions nominales de charge et de pression. Le gain en température peut s'expliquer, non seulement par la diminution de production de calories, mais aussi par le rôle de drain thermique joué par les câbles de la nappe de triangulation (20).

La variante d'armature de sommet, montrée sur la figure 2, diffère de la variante décrite précédemment par la présence entre les deux nappes de sommet de travail (21) et (22) d'une nappe additionnelle (24) formée d'éléments métalliques, orientés sensiblement parallèlement à la direction circonférentielle, la largeur axiale L₄ de ladite nappe pouvant être comprise entre 80 % et 95 % de la largeur L₁ de la première nappe de travail (21), et son module d'élasticité à la traction étant au plus égal au module du même nom de la nappe de travail la plus extensible.

Des fils ou câbles orientés sensiblement parallèlement à la direction circonférentielle sont des fils ou câbles qui font avec ladite direction des angles compris dans l'intervalle +2,5°, -2,5° autour de 0°.

Un module d'élasticité à la traction d'une nappe de câbles résulte de la contrainte de traction, exercée selon la direction des câbles, nécessaire pour obtenir un allongement relatif donné ε, ledit module étant un module tangent. Par module d'élasticité de la nappe additionnelle au plus égal au module du même nom de la nappe de travail la plus extensible, il faut entendre que le module tangent de la nappe additionnelle, quelque soit l'allongement relatif, est au plus égal au module tangent de la nappe de travail la plus extensible quelque soit l'allongement relatif, la nappe la plus extensible étant la nappe qui, pour chaque valeur de contrainte de traction présente un allongement relatif supérieur à celui de l'autre nappe pour la même contrainte.

Cette deuxième variante permet une diminution supplémentaire des contraintes et déformations de cisaillement entre les extrémités des deux nappes de travail (21) et (22).

Les deux armatures de sommet représentées sur les figures 1 et 2 sont complétées par une nappe (23), dite de protection, et constituée de câbles élastiques, un câble élastique étant un câble qui présente à la force de rupture un allongement supérieur à 5 %.

## Revendications

1. Pneumatique comprenant une armature de carcasse (1) radiale surmontée d'une armature de sommet (2) composée d'au moins, en allant radialement de l'intérieur à l'extérieur, d'une nappe de triangulation (20) de fils ou câbles métalliques inextensibles formant avec la direction circonférentielle un angle α compris entre 60° et 90°, et de deux nappes de travail (21) et (22) formées de fils ou câbles métalliques inextensibles. croisés d'une nappe à la suivante en faisant avec la direction circonférentielle un angle α compris entre 10° et 45°, caractérisé en ce que la première nappe de travail (21) radialement adjacente à l'extérieur à la nappe de triangulation (20) a une largeur L₁ plus faible que la largeur L₀ de ladite nappe de triangulation (20), la deuxième nappe de travail (22), radialement au dessus de la première (21), ayant une largeur axiale L₂ plus grande que la largeur L₀ de la nappe de triangulation (20), et les bords de ladite deuxième nappe de travail (22) recouvrant les bords de ladite nappe de triangulation (20) de sorte que les distances radiales séparant les câbles respectifs des deux nappes au niveau desdits bords soit au plus égales à 1,5 mm sur une distance axiale l au moins égale à 2 % de la largeur axiale L₀ de la nappe de triangulation (20).

2. Pneumatique selon la revendication 1, caractérisé en ce qu'au moins une nappe (24) d'éléments métalliques circonférentiels est disposée radialement entre les deux nappes de travail (21) et (22), ladite nappe (24) ayant une largeur axiale L₄ inférieure à la largeur L₁ de la première nappe de travail (21), et son module d'élasticité à la traction étant au plus égal au module du même nom de la nappe de travail la plus extensible.

## Claims

1. A tyre comprising a radial carcass reinforcement (1) surmounted by a crown reinforcement (2) composed of at least, running radially from the inside to the outside, a triangulation ply (20) of inextensible metal wires or cables forming with the circumferential direction an angle α of between 60° and 90°, and two working plies (21) and (22) formed of inextensible metal wires or cables, crossed from one ply to the next, forming an angle α of between 10° and 45° with the circumferential direction, characterised in that the first working ply (21) radially adjacent on the outside to the triangulation ply (20) has a lesser width L₁ than the width L₀ of said triangulation ply (20), the second working ply (22), radially above the first (21), having a greater axial width L₂ than the width L₀ of the triangulation ply (20), and the edges of said second working ply (22) covering the edges of said triangulation ply (20) such that the radial distances between the respective cables of the two plies at said edges are at most 1.5 mm over an axial distance l of at least 2% of the axial width L₀ of the triangulation ply (20).

2. A tyre according to Claim 1, characterised in that at least one ply (24) of circumferential metal elements is arranged radially between the two working plies (21) and (22), said ply (24) having an axial width L₄ less than the width L₁ of the first working ply (21), and the elasticity modulus upon traction thereof being at most equal to the modulus of the same name of the most extensible working ply.

## Patentansprüche

1. Reifen mit einer radialen Karkassenbewehrung (1), über der eine Scheitelbewehrung (2) angebracht ist, die, von radial innen nach außen gesehen, aus einer Triangulationslage (20) aus undehnbaren Metallfäden oder -seilen, die mit der Umfangsrichtung einen Winkel α bilden, der zwischen 60° und 90° liegt, und aus zwei Arbeitslagen (21) und (22) zusammengesetzt ist, die aus undehnbaren Metallfäden oder -seilen gebildet sind, die von der einen Lage zur folgenden überkreuzt sind, wobei sie mit der Umfangsrichtung einen Winkel α bilden, der zwischen 10° und 45° liegt, dadurch gekennzeichnet, daß die erste Arbeitslage (21), die radial auf der Außenseite der Triangulationslage (20) benacbart ist, eine kleinere Breite L₁ aufweist als die Breite L₀ der genannten Triangulationslage (20), die zweite Arbeitslage (22) radial über der ersten (21) eine axiale Breite L₂ aufweist, die größer ist als die Breite L₀ der Triangulationslage (20), und die Ränder der genannten zweiten Arbeitslage (22) die Ränder der genannten Triangulationslage (20) derart abdecken, daß die radialen Abstände, die die jeweiligen Seile der beiden Lagen auf der Höhe der genannten Ränder trennen, höchstens 1,5 mm über einen axialen Abstand 1 betragen, der mindestens 2% der axialen Breite L₀ der Triangulationslage (20) beträgt.

2. Reifen nach Anspruch 1, dadurch gekennzeichnet, daß mindestens eine Lage (24) aus Metall-Umfangselementen radial zwischen den beiden Arbeitslagen (21) und (22) angeordnet ist, die genannte Lage (24) eine axiale Breite L₄ aufweist, die kleiner ist als die Breite L₁ der ersten Arbeitslage (21), und ihr Elastizitätsmodul auf Zug höchstens gleich ist dem gleichnamigen Modul der dehnbarsten Arbeitslage.
